# EUROPÄISCHE PATENTSCHRIFT

(11) **EP 3 620 391 B1**
(45) Veröffentlichungstag und Bekanntmachung des Hinweises auf die Patenterteilung: **06.10.2021**
(21) Anmeldenummer: 19193141.9
(22) Anmeldetag: 22.08.2019
(51) Int. Cl.: B64F 1/36, G01B 5/02, E01F 13/00, G01B 3/14, H05B 33/08

(54) **VORRICHTUNG ZUR ÜBERPRÜFUNG DER ABMESSUNGEN EINES GEPÄCKSTÜCKS FÜR DEN FLUGVERKEHR**
DEVICE FOR CHECKING THE DIMENSIONS OF LUGGAGE FOR AIRCRAFT
DISPOSITIF DE VÉRIFICATION DES DIMENSIONS D'UN BAGAGE POUR LE TRAFIC AÉRIEN

(30) Priorität: 05.09.2018 DE 102018121690
(43) Veröffentlichungstag der Anmeldung: 11.03.2020
(73) Patentinhaber: Via Guide GmbH, 59757 Arnsberg (DE)
(72) Erfinder: SCHNIEDER, Andreas, 59759 Arnsberg (DE)
(74) Vertreter: Schäperklaus, Jochen

(56) Entgegenhaltungen:
- WO-A2-99/17075
- CA-A1- 2 337 584
- CN-U- 202 501 914
- DE-A1-102012 002 434
- DE-A1-102014 105 520
- US-A- 5 878 379
- US-A1- 2015 096 813

## Beschreibung

Die vorliegende Erfindung betrifft eine Vorrichtung zur Überprüfung der Abmessungen eines Gepäckstücks, insbesondere eines Handgepäckstücks, für den Flugverkehr gemäß dem Oberbegriff des Anspruchs 1. Die Vorrichtung kann auch in anderen Verkehrsbereichen wie beispielsweise im Bahnverkehr oder in der Schifffahrt eingesetzt werden.

Es ist üblich, dass derartige Vorrichtungen als separate Waagen oder als Aufnahmerahmen für Handgepäckstücke ausgebildet sind. Wegen der bei den meisten Fluglinien unterschiedlichen Anforderungen an Abmessungen und Gewicht eines Handgepäckstücks müssen im Stand der Technik viele verschiedene Aufnahmerahmen verwendet werden.

Eine Vorrichtung der eingangs genannten Art ist aus der CN 202 501 914 U bekannt. Die darin beschriebene Vorrichtung weist auf einem L-förmigen Träger Markierungen von Längenskalen auf, die ein Ablesen der Abmessungen eines auf den Träger aufgebrachten Gepäckstücks ermöglichen. Dabei sind die Markierungen in einem zulässigen Bereich grün und in einem nicht zulässigen Bereich rot gefärbt.

Aus der DE 10 2012 002 434 A1 ist ein Multifunktionsmessgerät bekannt, mit dem die Abmessungen und das Gewicht eines Gepäckstücks ermittelt werden können. Das Gerät umfasst eine Waage und ein Maßband.

Aus der WO 99/17075 A2 ist Vorrichtung zur Überprüfung der Abmessungen und des Gewichts eines Gepäckstücks bekannt. Die Vorrichtung umfasst einen oben, unten und seitlich begrenzten Messraum, durch den das Gepäckstück beispielsweise von einem Förderband hindurch bewegt werden kann. In dem Messraum sind Sensoren zur Ermittlung der Abmessungen des Gepäckstücks sowie eine Waage angeordnet.

Eine weitere Vorrichtung zur Überprüfung der Abmessungen und des Gewichts eines Gepäckstücks ist aus der CA 2 337 584 A1 bekannt. Die Vorrichtung umfasst einen Aufnahmerahmen für Handgepäckstücke und eine unterhalb des Rahmens angeordnete Waage.

Eine weitere Vorrichtung zur Überprüfung der Abmessungen eines Gepäckstücks ist aus der WO 2015/052165 A1 bekannt. Die darin beschriebene Vorrichtung kann das Gewicht und die Abmessungen eines Gepäckstücks automatisch ermitteln und in einem Display anzeigen oder ausdrucken. Die Anforderungen der Fluglinie, mit der der Besitzer des Gepäckstücks fliegt, kann die Vorrichtung dem Ticket des Besitzers entnehmen. Dazu ist die Vorrichtung mit einem zentralen Computerterminal des Flughafens verbunden. Die Vorrichtung ist groß und schwer sowie komplex aufgebaut.

Aufgabe der vorliegenden Erfindung ist die Schaffung einer Vorrichtung der eingangs genannten Art, die einfach aufgebaut und/oder flexibler einsetzbar ist.

Dies wird durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Anzeigemittel in drei zueinander senkrechten Richtungen eine Mehrzahl von nebeneinander angeordneten Leuchtmitteln aufweisen, durch die einem Benutzer der Vorrichtung signalisiert werden kann, ob das Gepäckstück den Anforderungen entspricht. Durch die Leuchtmittel kann dem Benutzer der Vorrichtung mit einfachen Mitteln signalisiert werden, ob das aufgelegte Gepäckstück den Anforderungen entspricht.

Es kann dabei vorgesehen sein, dass für die Höhe des Gepäcksstücks Leuchtmittel vorgesehen sind, die in einer ersten Richtung in einer Reihe nebeneinander angeordnet sind, dass für die Breite des Gepäckstücks Leuchtmittel vorgesehen sind, die in einer zweiten, zu der der ersten Richtung senkrechten Richtung in einer Reihe nebeneinander angeordnet sind und dass für die Tiefe des Gepäckstücks Leuchtmittel vorgesehen sind, die in einer dritten, zu der ersten Richtung und der zweiten Richtung senkrechten Richtung in einer Reihe nebeneinander angeordnet sind. Dabei können die Leuchtmittel der einzelnen Reihen jeweils äquidistant zueinander angeordnet sein, wobei der Mittenabstand der Leuchtmittel insbesondere 1 cm betragen kann.

Es besteht die Möglichkeit, dass die Leuchtmittel mehrfarbig sind und durch ihre Farbe, insbesondere durch eine rote und eine grüne Farbe, verdeutlichen können, ob eine erlaubte Abmessung oder eine nicht erlaubte Abmessung vorliegt. Insbesondere können dabei die Leuchtmittel so angesteuert werden, dass die Leuchtmittel grün leuchten, wenn sie sich in einem Bereich befinden, der den vorgegebenen Anforderungen an die Höhe oder die Breite oder die Tiefe des Gepäckstücks genügt, wohingegen die Leuchtmittel rot leuchten, wenn sie sich in einem Bereich befinden, der den vorgegebenen Anforderungen an die Höhe oder die Breite oder die Tiefe des Gepäckstücks nicht genügt. Der Benutzer kann also nach dem Aufbringen des Gepäcksstücks auf die Vorrichtung sofort erkennen, ob das Gepäckstück den Anforderungen genügt oder nicht. Es ist weder erforderlich, dass dies von der Vorrichtung auf einem Display angezeigt oder ausgedruckt wird, noch dass das Gepäckstück in einen den Anforderungen entsprechenden Rahmen eingebracht wird.

Es kann vorgesehen sein, dass die Vorrichtung an unterschiedliche Anforderungen anpassbar ist. Dabei können Daten, die die Anforderungen betreffen, über einen Barcodescanner oder andere geeignete Schnittstellen eingelesen werden können, oder dass die Anpassung der Vorrichtung an die Anforderungen manuell durchgeführt werden kann. Beispielsweise können Mitarbeiter einer Fluglinie, die die Vorrichtung benutzen möchten, durch ein einmaliges Einscannen eines entsprechenden Barcodes die Vorrichtung an die speziellen Anforderungen der Fluglinie anpassen. Die Vorrichtung ist somit sehr einfach für den Wechsel einer Fluglinie zur nächsten Fluglinie an einem Gate geeignet. Insbesondere kann dabei die Vorrichtung so gestaltet sein, dass eine Anpassung an beliebige Anforderungen beziehungsweise an eine unbegrenzte Anzahl unterschiedlicher Anforderungen vorgenommen werden kann. Es können also beispielsweise nicht nur eine begrenzte Anzahl verschiedener Barcodes sondern beliebig viele verschiedene Barcodes generiert werden. Damit bietet die Vorrichtung für jede beliebige Kombination von Höhe, Breite und Tiefe eines Gepäckstücks die Möglichkeit, festzustellen und anzuzeigen, ob das aufgelegte Gepäckstück den Anforderungen entspricht.

Es kann vorgesehen sein, dass die Anzeigemittel im Betrieb der Vorrichtung verdeutlichen, inwieweit das Gewicht des Handgepäckstücks vorgegebenen Anforderungen genügt.

Es besteht die Möglichkeit, dass die Vorrichtung eine Waage umfasst, deren Messwert angezeigt werden kann. Auf diese Weise kann der Benutzer zusammen mit den Abmessungen auch das Gewicht des Gepäckstücks überprüfen. Auch das Überschreiten eines zulässigen Maximalgewichts durch das Gepäckstück kann beispielsweise durch eine rote Warnleuchte oder vergleichbare leicht registrierbare Signale angezeigt werden.

Es kann vorgesehen sein, dass die Vorrichtung zwei, vorzugsweise drei, zueinander senkrechte Anlageflächen für das Gepäckstück aufweist. Dabei können die Leuchtmittel signalisieren, ob der Abstand von der jeweiligen Anlagefläche einem Bereich zugeordnet ist, der den vorgegebenen Anforderungen an die Höhe oder die Breite oder die Tiefe des Gepäckstücks genügt.

Es besteht die Möglichkeit, dass die Vorrichtung bewegbar ist, insbesondere an ihrer Unterseite Rollen aufweist. Auf diese Weise kann die Vorrichtung einfach von Mitarbeitern einer Fluglinie, die eine Möglichkeit der Kontrolle der Abmessungen von Handgepäckstücken benötigen, in den Abfertigungsbereich bewegt werden.

Es kann vorgesehen sein, dass die Vorrichtung eine Anzeigefläche für Informationen wie den Namen der die Anforderungen stellenden Fluglinie und/oder die geforderten maximalen Abmessungen des Gepäckstücks und/oder das geforderte maximale Gewicht des Gepäckstücks aufweist. Diese Informationen können dem Benutzer schnell und einfach die Anforderungen an das Handgepäck verdeutlichen. Beispielsweise können auf die Anzeigefläche Magnetfolien der einzelnen Fluglinien auswechselbar aufgebracht werden, so dass eine einfache Umrüstung der Vorrichtung ermöglicht wird.

Es besteht die Möglichkeit, dass die Vorrichtung Anbringungsmittel für Gurtenden einer Warteschlagenbegrenzung aufweist, um die Vorrichtung in eine Warteschlange zu integrieren. Auf diese Weise können die Benutzer während des Anstehens in der Warteschlange ihr Handgepäck überprüfen.

Es kann vorgesehen sein, dass die Vorrichtung eine Energiespeichereinheit umfasst, insbesondere dass die Vorrichtung batteriebetrieben ist. Auf diese Weise ist die Vorrichtung noch einfacher an beliebigen Orten positionierbar.

Weitere Merkmale und Vorteile der vorliegenden Erfindung werden deutlich anhand der nachfolgenden Beschreibung bevorzugter Ausführungsbeispiele unter Bezugnahme auf die beigefügten Zeichnungen. Darin zeigen:
- Fig. 1: eine perspektivische Ansicht einer erfindungsgemäßen Vorrichtung;
- Fig. 2: eine Detailansicht gemäß dem Pfeil II in Fig. 1;
- Fig. 3: eine Detailansicht gemäß dem Pfeil III in Fig. 1;
- Fig. 4: eine Detailansicht gemäß dem Pfeil IV in Fig. 1;
- Fig. 5: eine Detailansicht gemäß dem Pfeil V in Fig. 1;
- Fig. 6: eine weitere perspektivische Ansicht der Vorrichtung gemäß Fig. 1;
- Fig. 7: eine Rückansicht der Vorrichtung gemäß Fig. 1;
- Fig. 8: eine Seitenansicht der Vorrichtung gemäß Fig. 1;
- Fig. 9: eine Vorderansicht der Vorrichtung gemäß Fig. 1;
- Fig. 10: eine Draufsicht auf die Vorrichtung gemäß Fig. 1.

In den Figuren sind gleiche und funktional gleiche Teile mit gleichen Bezugszeichen versehen. Dabei sind in einige der Figuren kartesische Koordinatensysteme eingezeichnet.

Die abgebildete Ausführungsform einer erfindungsgemäßen Vorrichtung 1 umfasst eine untere Aufstellfläche 2, von der sich eine Rückwand 3 und zwei Seitenwände 4, 5 nach oben erstrecken. Dabei grenzen die Seitenwände 4, 5 mit ihren hinteren Enden an die Rückwand 3 an. Weiterhin erstrecken sich die Seitenwände 4, 5 bis an das vordere Ende der Aufstellfläche 2.

Es besteht durchaus die Möglichkeit, dass die Seitenwände 4, 5 sich nicht bis an die Rückwand 3 oder bis an das vordere Ende der Aufstellfläche 2 erstrecken.

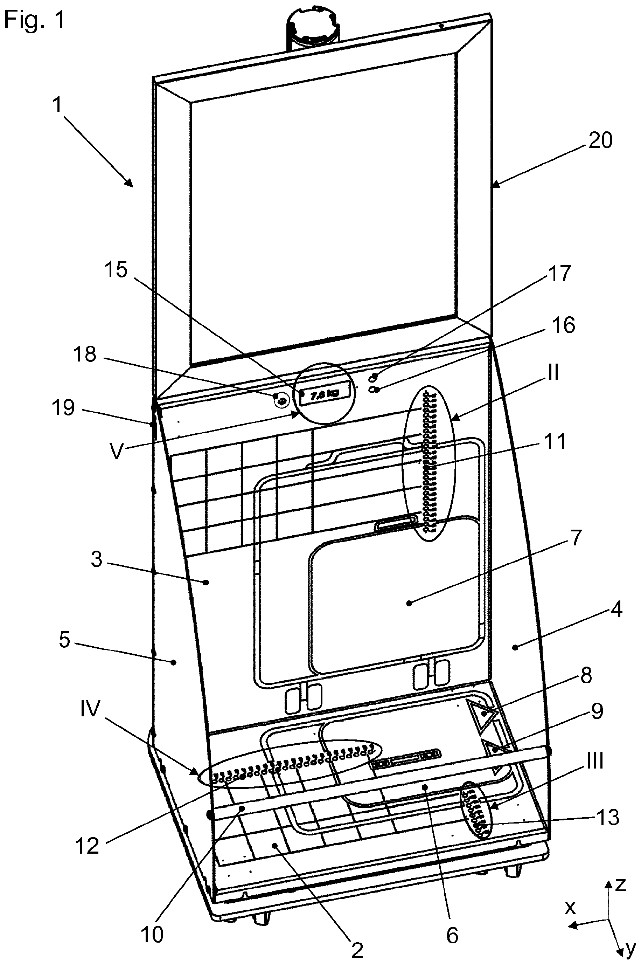

Die Aufstellfläche 2, die Rückwand 3 und die Seitenwände 4, 5 schließen jeweils Winkel von 90° miteinander ein. Daher können die Aufstellfläche 2, die Rückwand 3 und beispielsweise die in Fig. 1 rechte Seitenwand 4 als drei zueinander senkrechte Anlageflächen für ein nicht abgebildetes Gepäckstück dienen.

Es kann durchaus vorgesehen werden, dass das Gepäckstück nicht an die rechte Seitenwand 4 sondern an die linke Seitenwand 5 angelegt werden muss, so dass die linke Seitenwand 5 anstelle der rechten Seitenwand 4 mit der Aufstellfläche 2 und der Rückwand 3 als Anlagefläche dient. Es besteht weiterhin die Möglichkeit, dass die nicht als Anlagefläche dienende Seitenwand 4, 5 weggelassen wird.

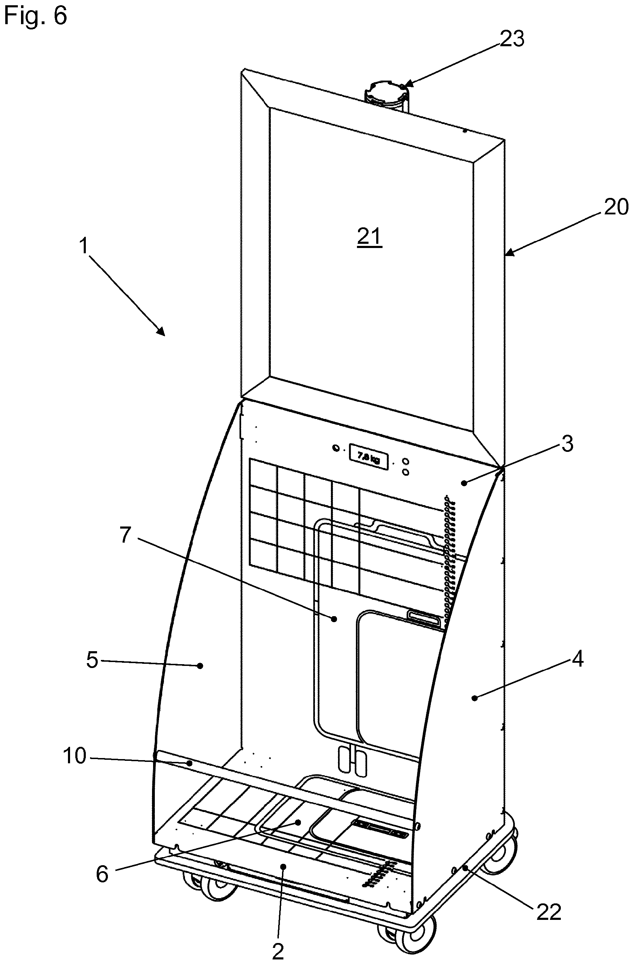

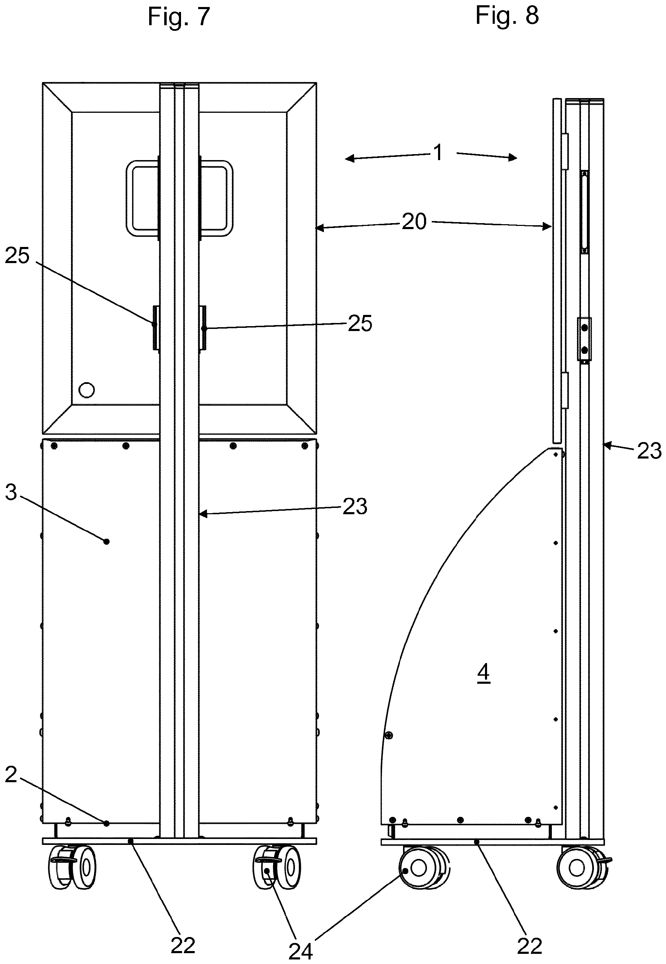

Auf der Aufstellfläche 2 und der Rückwand 3 sind für den Zweck der Anlage eines Gepäckstücks schematische Abbildungen 6, 7 von Gepäckstücken angeordnet, die dem Benutzer verdeutlichen sollen, wie er ein Gepäckstück auf die Vorrichtung 1 aufbringen sollte. Weiterhin finden sich auch auf der Aufstellfläche 2 zwei Pfeile 8, 9 die in Richtung auf die rechte Seitenwand 4 zeigen und damit verdeutlichen, dass das Gepäckstück an die rechte Seitenwand 4 angelegt werden soll.

Dabei kann das Gepäckstück insbesondere so auf die Vorrichtung 1 aufgebracht werden, dass es auf der Aufstellfläche 2 steht und dabei hinten an der Rückwand 3 anliegt sowie rechts an der rechten Seitenwand 4 anliegt. Um zu verhindern, dass das Gepäckstück nach vorne von der Aufstellfläche herunterfällt, ist eine Querstange 10 vorgesehen, die beabstandet zu der Aufstellfläche 2 die beiden Seitenwände 4, 5 miteinander verbindet.

Die Vorrichtung umfasst weiterhin Anzeigemittel, die in drei zueinander senkrechten Richtungen x, y, z eine Mehrzahl von in Reihen nebeneinander angeordneten Leuchtmitteln 11, 12, 13 aufweisen (siehe Fig. 1 sowie Fig. 2 bis Fig. 4). Die Leuchtmittel 11, 12, 13 können insbesondere mehrfarbig sein beziehungsweise in unterschiedlichen Farben leuchten. Vorzugsweise dienen als Leuchtmittel 11, 12, 13 grüne und rote Leuchtdioden.

Dabei können die Leuchtdioden beispielsweise so ausgebildet sein, dass sie je nach Bedarf grünes oder rotes Licht aussenden können. Alternativ kann auch jedes der Leuchtmittel 11, 12, 13 ein Fenster aufweisen, hinter dem eine rote und eine grüne Leuchtdiode angeordnet sind, so dass von dem Leuchtmittel 11, 12, 13 nach Bedarf durch entsprechende Ansteuerung der Leuchtdioden rotes oder grünes Licht ausgesendet werden kann.

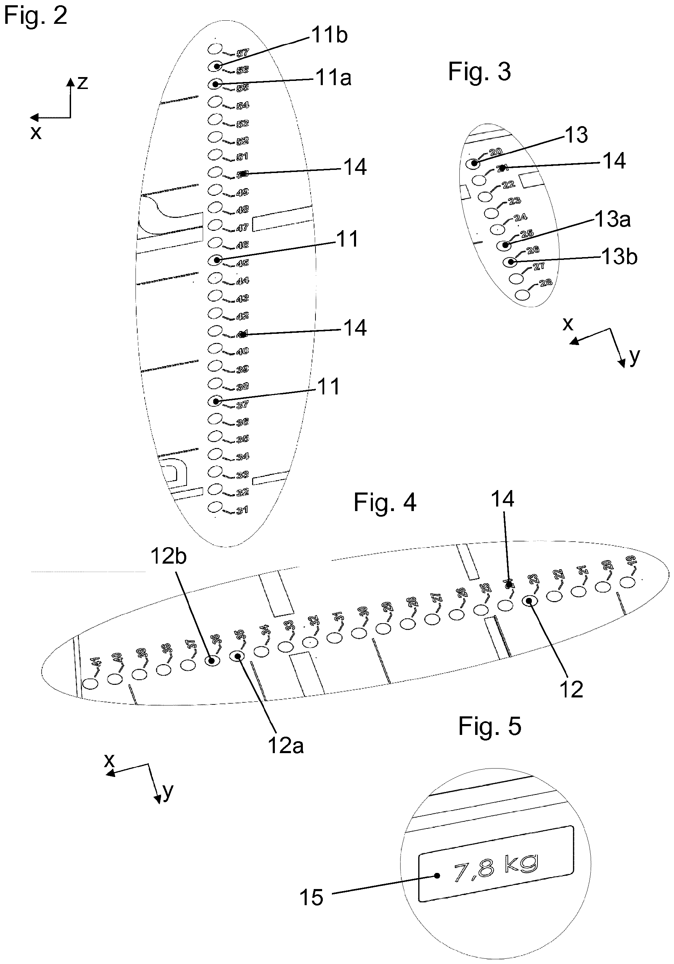

Für die Höhe des Gepäcksstücks sind Leuchtmittel 11 vorgesehen, die in der in Fig. 1 und Fig. 2 eingezeichneten z-Richtung nebeneinander angeordnet sind. Für die Breite des Gepäckstücks sind Leuchtmittel 12 vorgesehen, die in der in Fig. 1 und Fig. 3 eingezeichneten x-Richtung nebeneinander angeordnet sind. Für die Tiefe des Gepäckstücks sind Leuchtmittel 13 vorgesehen, die in der in Fig. 1 und Fig. 4 eingezeichneten y-Richtung nebeneinander angeordnet sind.

Dabei sind die Leuchtmittel 11, 12, 13 der einzelnen Reihen jeweils äquidistant zueinander angeordnet, wobei der Mittenabstand der Leuchtmittel 11, 12, 13 insbesondere 1 cm betragen kann. Einem jeden der Leuchtmittel 11, 12, 13 ist eine Zahl 14 zugeordnet, die die jeweilige Entfernung von der zugeordneten Anlagefläche - also der Aufstellfläche 2, der Rückwand 3 oder der rechten Seitenwand 4 - zu dem Leuchtmittel 11, 12, 13 angibt.

Die Anzeigemittel können die Anforderungen einer die Vorrichtung 1 benutzenden Fluglinie an die Höhe, die Breite und die Tiefe eines Gepäckstücks verdeutlichen. Dazu können die Leuchtmittel 11, 12, 13 so angesteuert werden, dass die Leuchtmittel 11, 12, 13 grün leuchten, die sich neben einer Zahl befinden, die in einem von der Fluglinie erlaubten Bereich der Höhe oder der Breite oder der Tiefe liegt. Weiterhin können die Leuchtmittel 11, 12, 13 so angesteuert werden, dass die Leuchtmittel 11, 12, 13 rot leuchten, die sich neben einer Zahl befinden, die außerhalb eines von der Fluglinie erlaubten Bereichs der Höhe oder der Breite oder der Tiefe liegt.

Wenn also beispielsweise eine Fluglinie eine Höhe von 55 cm, eine Breite von 35 cm und eine Tiefe von 25 cm für ein Handgepäck erlaubt, werden die Leuchtmittel 11 für die Höhe bis zu dem der Zahl 14 mit dem Zahlenwert "55" zugeordneten Leuchtmittel 11a grün leuchten und die Leuchtmittel 11 ab dem der Zahl 14 mit dem Zahlenwert "56" zugeordneten Leuchtmittel 11b rot leuchten (siehe Fig. 2).

Weiterhin werden die Leuchtmittel 12 für die Breite bis zu dem der Zahl 14 mit dem Zahlenwert "35" zugeordneten Leuchtmittel 12a grün leuchten und die Leuchtmittel 12 ab dem der Zahl 14 mit dem Zahlenwert "36" zugeordneten Leuchtmittel 12b rot leuchten (siehe Fig. 3). Weiterhin werden die Leuchtmittel 13 für die Tiefe bis zu dem der Zahl 14 mit dem Zahlenwert "25" zugeordneten Leuchtmittel 13a grün leuchten und die Leuchtmittel 13 ab dem der Zahl 14 mit dem Zahlenwert "26" zugeordneten Leuchtmittel 13b rot leuchten (siehe Fig. 4).

Wenn der Benutzer also sein Gepäckstück so auf die Vorrichtung 1 aufbringt, dass es auf der Aufstellfläche 2 aufliegt und an der Rückwand 3 sowie an der rechten Seitenwand 4 anliegt, verdeutlichen ihm die grün und rot leuchtenden Leuchtmittel 11, 11a, 11b; 12, 12a, 12b; 13, 13a, 13b, ob sein Gepäckstück den Anforderungen der Fluglinie entspricht. Insbesondere wenn oben, vorne und links jeweils grüne Leuchtmittel 11, 12, 13 zu sehen sind, entspricht das Gepäckstück den Vorgaben der Fluglinie. Wenn jedoch oben oder vorne oder links ein rotes Leuchtmittel zu sehen ist, entspricht das Gepäckstück nicht den Anforderungen der Fluglinie.

Die abgebildete Ausführungsform der Vorrichtung 1 umfasst eine Waage, die das Gewicht eines auf der Aufstellfläche 2 abgestellten Gepäckstücks messen kann. Die Vorrichtung umfasst ein Anzeigefeld 15, in dem das von der Waage ermittelte Gewicht angezeigt werden kann. Das Anzeigefeld 15 ist im abgebildeten Ausführungsbeispiel im oberen mittleren Bereich der Rückwand 16 angeordnet (siehe Fig. 1 und Fig. 5).

Rechts neben dem Anzeigefeld 15 sind bei der abgebildeten Ausführungsform zwei übereinander angeordnete Leuchtmittel 16, 17 vorgesehen, die signalisieren können, ob das Gewicht des Gepäckstücks den Anforderungen der Fluglinie entspricht. Beispielsweise kann das untere Leuchtmittel 16 grün leuchten, wenn das Gewicht kleiner oder gleich dem von der Fluglinie tolerierten Maximalgewicht ist. Weiterhin kann beispielsweise das obere Leuchtmittel 17 rot leuchten, wenn das Gewicht größer als das von der Fluglinie tolerierte Maximalgewicht ist.

Es besteht durchaus die Möglichkeit, lediglich ein Leuchtmittel vorzusehen, dass bei Bedarf grün oder rot leuchten kann. Weiterhin besteht die Möglichkeit auf die Leuchtmittel 16, 17 zu verzichten und nur das Anzeigefeld 15 vorzusehen. Weiterhin können stattdessen auch akustische Anzeigemittel vorgesehen sein.

Links neben dem Anzeigefeld ist bei der abgebildeten Ausführungsform ein Näherungssensor 18 angeordnet, der die Annäherung eines Gepäckstücks erfassen kann. Der Näherungssensor 18 kann bei Annäherung eines Gepäckstücks veranlassen, dass die Vorrichtung eingeschaltet wird.

Anstelle des Näherungssensors 18 für einen automatischen Start der Vorrichtung 1 kann auch ein Startknopf für ein manuelles Einschalten der Vorrichtung 1 vorgesehen sein.

Die abgebildete Ausführungsform einer Vorrichtung 1 ist an unterschiedliche Anforderungen einer Fluglinie hinsichtlich des Gewichts und der Abmessungen des Gepäckstücks anpassbar. Dies kann über nicht abgebildete manuelle Einstellmittel erfolgen. Es ist jedoch insbesondere vorgesehen, dass die Anforderungen der Fluglinie digital erfasst werden können wie beispielsweise über einen in Fig. 1 an der linken Seitenwand 5 angeordneten Barcodescanner 19. Alternativ kann auch eine digitale Übertragung der Anforderungen an die Vorrichtung 1 über andere geeignete Schnittstellen erfolgen, beispielsweise über eine Steckverbindung oder eine drahtlose Verbindung eines Datenspeichers oder eines mobilen Endgeräts der Fluglinie mit der Vorrichtung 1.

Es besteht also durchaus die Möglichkeit, dass die Vorrichtung 1 bei Benutzung durch eine erste Fluglinie die oben beispielhaft genannten erlaubten Abmessungen mit einer Höhe von 55 cm, einer Breite von 35 cm und einer Tiefe von 25 cm für ein Handgepäck anzeigt, wohingegen die Vorrichtung 1 bei Benutzung durch eine zweite Fluglinie andere erlaubte Abmessungen wie beispielsweise eine Höhe von 65 cm, eine Breite von 30 cm und eine Tiefe von 28 cm für ein Handgepäck anzeigt. Entsprechend kann sich auch das erlaubte Gewicht des Handgepäcks ändern, so dass die Vorrichtung 1 je nach Anforderung der Fluglinien bei anderen Gewichten mit einem rot leuchtenden Leuchtmittel 17 ein zu hohes Gewicht signalisiert.

Oberhalb der Rückwand 3 ist eine flächige Halterung 20 für eine Magnetfolie vorgesehen, die von der die Vorrichtung 1 nutzenden Fluglinie auf die in Fig. 1, Fig. 6 und Fig. 9 ersichtliche freie Anzeigefläche 21 der Halterung 20 aufbringbar ist. Die Magnetfolie kann beispielsweise neben dem Namen und dem Logo der Fluglinie Angaben über die erlaubten Abmessungen und das erlaubte Gewicht des Handgepäcks aufweisen. Beispielsweise kann auf der Magnetfolie auch ein Barcode vorgesehen sein, der vor dem Aufbringen der Magnetfolie auf die freie Anzeigefläche 21 mit dem Barcodeleser 19 eingelesen werden kann, um die Vorrichtung 1 an die Anforderungen der Fluglinie anzupassen.

Die Vorrichtung 1 umfasst eine unterhalb der Aufstellfläche 2 angeordnete Grundplatte 22, von der sich eine Stange 23 bis zum oberen Ende der Halterung 20 nach oben erstreckt (siehe Fig. 7 und Fig. 8). Unter der Grundplatte 22 sind Rollen 24 vorgesehen, um die Vorrichtung einfach bewegen zu können.

An den Seiten der Stange 23 sind Aufnahmen 25 für nicht abgebildete Gurtenden einer Warteschlangenbegrenzung vorgesehen, um die Vorrichtung 1 in eine Warteschlangenbegrenzung integrieren zu können.

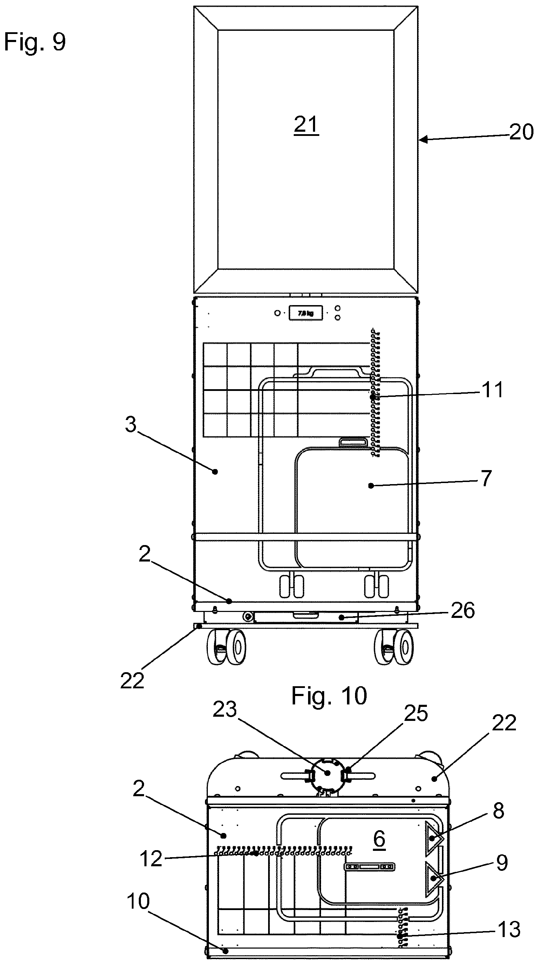

Es besteht die Möglichkeit, dass die Vorrichtung 1 eine Energiespeichereinheit umfasst, insbesondere dass die Vorrichtung 1 batteriebetrieben ist. Dazu kann ein in Fig. 9 abgebildetes Akkufach 26 vorgesehen sein.

## Patentansprüche

1. Vorrichtung (1) zur Überprüfung der Abmessungen eines Gepäckstücks, insbesondere eines Handgepäckstücks, für den Flugverkehr, umfassend Anzeigemittel, die dazu eingerichtet sind, im Betrieb der Vorrichtung (1) zu verdeutlichen, inwieweit die Abmessungen des Gepäckstücks vorgegebenen Anforderungen genügen, **dadurch gekennzeichnet, dass** die Anzeigemittel in drei zueinander senkrechten Richtungen jeweils eine Mehrzahl von nebeneinander angeordneten Leuchtmitteln (11, 12, 13) aufweisen, durch die einem Benutzer der Vorrichtung signalisiert werden kann, ob das Gepäckstück den Anforderungen entspricht.

2. Vorrichtung (1) nach Anspruch 1, **dadurch gekennzeichnet, dass** für die Höhe des Gepäcksstücks Leuchtmittel (11) vorgesehen sind, die in einer ersten Richtung (z) in einer Reihe nebeneinander angeordnet sind, dass für die Breite des Gepäckstücks Leuchtmittel (12) vorgesehen sind, die in einer zweiten, zu der der ersten Richtung (z) senkrechten Richtung (x) in einer Reihe nebeneinander angeordnet sind und dass für die Tiefe des Gepäckstücks Leuchtmittel (13) vorgesehen sind, die in einer dritten, zu der ersten Richtung (z) und der zweiten Richtung (x) senkrechten Richtung (y) in einer Reihe nebeneinander angeordnet sind.

3. Vorrichtung (1) nach einem der Ansprüche 1 oder 2, **dadurch gekennzeichnet, dass** die Leuchtmittel (11, 12, 13) der einzelnen Reihen jeweils äquidistant zueinander angeordnet sind, wobei der Mittenabstand der Leuchtmittel (11, 12, 13) insbesondere 1 cm beträgt.

4. Vorrichtung (1) nach einem der Ansprüche 1 bis 3, **dadurch gekennzeichnet, dass** die Leuchtmittel (11, 12, 13) mehrfarbig sind und durch ihre Farbe, insbesondere durch eine rote und eine grüne Farbe, verdeutlichen können, ob eine erlaubte Abmessung oder eine nicht erlaubte Abmessung vorliegt.

5. Vorrichtung (1) nach Anspruch 4, **dadurch gekennzeichnet, dass** die Leuchtmittel (11, 12, 13) so angesteuert werden können, dass die Leuchtmittel (11, 12, 13) grün leuchten, wenn sie sich in einem Bereich befinden, der den vorgegebenen Anforderungen an die Höhe oder die Breite oder die Tiefe des Gepäckstücks genügt, wohingegen die Leuchtmittel (11, 12, 13) rot leuchten, wenn sie sich in einem Bereich befinden, der den vorgegebenen Anforderungen an die der Höhe oder die Breite oder die Tiefe des Gepäckstücks nicht genügt.

6. Vorrichtung (1) nach einem der Ansprüche 1 bis 5, **dadurch gekennzeichnet, dass** die Vorrichtung (1) an unterschiedliche Anforderungen anpassbar ist.

7. Vorrichtung (1) nach Anspruch 6, **dadurch gekennzeichnet, dass** die Vorrichtung (1) derart eingerichtet ist, dass Daten, die die Anforderungen betreffen, über einen Barcodescanner (19) oder andere geeignete Schnittstellen eingelesen werden können, oder dass die Anpassung der Vorrichtung (1) an die Anforderungen manuell durchgeführt werden kann.

8. Vorrichtung (1) nach einem der Ansprüche 1 bis 7, **dadurch gekennzeichnet, dass** die Anzeigemittel weiter dazu eingerichtet sind, im Betrieb der Vorrichtung (1) zu verdeutlichen, inwieweit das Gewicht des Handgepäckstücks vorgegebenen Anforderungen genügt.

9. Vorrichtung (1) nach einem der Ansprüche 1 bis 8, **dadurch gekennzeichnet, dass** die Vorrichtung (1) eine Waage umfasst, deren Messwert angezeigt werden kann.

10. Vorrichtung (1) nach einem der Ansprüche 1 bis 9, **dadurch gekennzeichnet, dass** die Vorrichtung (1) zwei, vorzugsweise drei, zueinander senkrechte Anlageflächen für das Gepäckstück aufweist.

11. Vorrichtung (1) nach Anspruch 10, **dadurch gekennzeichnet, dass** die Leuchtmittel (11, 12, 13) dazu eingerichtet sind zu signalisieren, ob der Abstand von der jeweiligen Anlagefläche einem Bereich zugeordnet ist, der den vorgegebenen Anforderungen an die Höhe oder die Breite oder die Tiefe des Gepäckstücks genügt.

12. Vorrichtung (1) nach einem der Ansprüche 1 bis 11, **dadurch gekennzeichnet, dass** die Vorrichtung (1) bewegbar ist, insbesondere an ihrer Unterseite Rollen (24) aufweist.

13. Vorrichtung (1) nach einem der Ansprüche 1 bis 12, **dadurch gekennzeichnet, dass** die Vorrichtung (1) eine Anzeigefläche (21) für Informationen wie den Namen der die Anforderungen stellenden Fluglinie und/oder die geforderten maximalen Abmessungen des Gepäckstücks und/oder das geforderte maximale Gewicht des Gepäckstücks aufweist.

14. Vorrichtung (1) nach einem der Ansprüche 1 bis 13, **dadurch gekennzeichnet, dass** die Vorrichtung (1) Anbringungsmittel, insbesondere Aufnahmen (25), für Gurtenden einer Warteschlagenbegrenzung aufweist, um die Vorrichtung in eine Warteschlange zu integrieren.

15. Vorrichtung (1) nach einem der Ansprüche 1 bis 14, **dadurch gekennzeichnet, dass** die Vorrichtung (1) eine Energiespeichereinheit umfasst, insbesondere dass die Vorrichtung batteriebetrieben ist.

## Claims

1. Device (1) for checking the dimensions of an item of luggage, in particular an item of hand luggage, for air travel, comprising display means which are adapted to make clear, during operation of the device (1), the extent to which the dimensions of the item of luggage satisfy specified requirements, **characterised in that** the display means have, in each of three mutually perpendicular directions, a plurality of light sources (11, 12, 13) arranged next to one another, by means of which it can be indicated to a user of the device whether the item of luggage complies with the requirements.

2. Device (1) according to claim 1, **characterised in that**, for the height of the item of luggage, light sources (11) are provided that are arranged next to one another in a row in a first direction (z), **in that**, for the width of the item of luggage, light sources (12) are provided that are arranged next to one another in a row in a second direction (x) perpendicular to the first direction (z), and **in that**, for the depth of the item of luggage, light sources (13) are provided that are arranged next to one another in a row in a third direction (y) perpendicular to the first direction (z) and the second direction (x).

3. Device (1) according to any one of claims 1 or 2, **characterised in that** the light sources (11, 12, 13) of the individual rows are in each case arranged equidistantly with respect to one another, the centre-to-centre spacing of the light sources (11, 12, 13) being in particular 1 cm.

4. Device (1) according to any one of claims 1 to 3, **characterised in that** the light sources (11, 12, 13) are multicoloured and through their colour, in particular through a red and a green colour, can make clear whether a permitted dimension or a non-permitted dimension is present.

5. Device (1) according to claim 4, **characterised in that** the light sources (11, 12, 13) can be controlled in such a way that the light sources (11, 12, 13) illuminate green when they are located in a range that satisfies the specified requirements for the height or width or depth of the item of luggage, whereas the light sources (11, 12, 13) illuminate red when they are located in a range that does not satisfy the specified requirements for the height or width or depth of the item of luggage.

6. Device (1) according to any one of claims 1 to 5, **characterised in that** the device (1) is customisable to different requirements.

7. Device (1) according to claim 6, **characterised in that** the device (1) is adapted in such a way that data relating to the requirements can be read in via a barcode scanner (19) or other suitable interfaces, or **in that** the customisation of the device (1) to the requirements can be performed manually.

8. Device (1) according to any one of claims 1 to 7, **characterised in that** the display means are further adapted to make clear, during operation of the device (1), the extent to which the weight of the item of hand luggage satisfies specified requirements.

9. Device (1) according to any one of claims 1 to 8, **characterised in that** the device (1) comprises weighing scales, the measured value of which can be displayed.

10. Device (1) according to any one of claims 1 to 9, **characterised in that** the device (1) has two, preferably three, mutually perpendicular contact surfaces for the item of luggage.

11. Device (1) according to claim 10, **characterised in that** the light sources (11, 12, 13) are adapted to indicate whether the distance from the respective contact surface is associated with a range that satisfies the specified requirements for the height or width or depth of the item of luggage.

12. Device (1) according to any one of claims 1 to 11, **characterised in that** the device (1) is movable, in particular has castors (24) on its underside.

13. Device (1) according to any one of claims 1 to 12, **characterised in that** the device (1) has a display area (21) for information such as the name of the airline setting the requirements and/or the required maximum dimensions of the item of luggage and/or the required maximum weight of the item of luggage.

14. Device (1) according to any one of claims 1 to 13, **characterised in that** the device (1) has attachment means, in particular receptacles (25), for belt ends of a queue boundary, in order to integrate the device into a queue.

15. Device (1) according to any one of claims 1 to 14, **characterised in that** the device (1) comprises an energy storage unit, in particular **in that** the device is battery-operated.

## Revendications

1. Dispositif (1) pour contrôler les dimensions d'un bagage, en particulier d'un bagage à main, pour les voyages en avion, comprenant des moyens d'affichage qui sont conçus pour indiquer, pendant le fonctionnement du dispositif (1), dans quelle mesure les dimensions du bagage répondent à des exigences prédéfinies, **caractérisé en ce que** les moyens d'affichage présentent respectivement dans trois directions perpendiculaires les unes aux autres une pluralité de moyens d'éclairage (11, 12, 13) agencés les uns à côté des autres, au moyen desquels il est possible d'indiquer à un utilisateur du dispositif si le bagage répond aux exigences.

2. Dispositif (1) selon la revendication 1, **caractérisé en ce que**, pour la hauteur du bagage, des moyens d'éclairage (11) sont prévus, lesquels sont agencés les uns à côté des autres en une rangée dans une première direction (z), **en ce que**, pour la largeur du bagage, des moyens d'éclairage (12) sont prévus, lesquels sont agencés les uns à côté des autres en une rangée dans une deuxième direction (x) perpendiculaire à celle de la première direction (z), et **en ce que**, pour la profondeur du bagage, des moyens d'éclairage (13) sont prévus, lesquels sont agencés les uns à côté des autres en une rangée dans une troisième direction (y) perpendiculaire à la première direction (z) et à la deuxième direction (x).

3. Dispositif (1) selon l'une quelconque des revendications 1 ou 2, **caractérisé en ce que** les moyens d'éclairage (11, 12, 13) des rangées isolées sont respectivement agencés à équidistance les uns des autres, dans lequel la distance entre les centres des moyens d'éclairage (11, 12, 13) est en particulier de 1 cm.

4. Dispositif (1) selon l'une quelconque des revendications 1 à 3, **caractérisé en ce que** les moyens d'éclairage (11, 12, 13) sont multicolores et peuvent indiquer par leur couleur, en particulier par une couleur rouge et une couleur verte, si une dimension autorisée ou une dimension non autorisée est présente.

5. Dispositif (1) selon la revendication 4, **caractérisé en ce que** les moyens d'éclairage (11, 12, 13) peuvent être commandés de telle sorte que les moyens d'éclairage (11, 12, 13) s'allument en vert lorsqu'ils se trouvent dans une plage qui satisfait aux exigences prédéterminées pour la hauteur ou la largeur ou la profondeur du bagage, tandis que les moyens d'éclairage (11, 12, 13) s'allument en rouge lorsqu'ils se trouvent dans une plage qui ne satisfait pas aux exigences prédéterminées pour la hauteur ou la largeur ou la profondeur du bagage.

6. Dispositif (1) selon l'une quelconque des revendications 1 à 5, **caractérisé en ce que** le dispositif (1) est adaptable à différentes exigences.

7. Dispositif (1) selon la revendication 6, **caractérisé en ce que** le dispositif (1) est configuré de telle sorte que des données qui correspondent aux exigences peuvent être lues par l'intermédiaire d'un lecteur de code-barres (19) ou d'autres interfaces appropriées, ou **en ce que** l'adaptation du dispositif (1) aux exigences peut être effectuée manuellement.

8. Dispositif (1) selon l'une quelconque des revendications 1 à 7, **caractérisé en ce que** les moyens d'indication sont en outre conçus pour indiquer, pendant le fonctionnement du dispositif (1), dans quelle mesure le poids du bagage à main répond à des exigences prédéterminées.

9. Dispositif (1) selon l'une quelconque des revendications 1 à 8, **caractérisé en ce que** le dispositif (1) comprend une échelle dont la valeur de mesure peut être affichée.

10. Dispositif (1) selon l'une quelconque des revendications 1 à 9, **caractérisé en ce que** le dispositif (1) présente deux, de préférence trois, surfaces de contact perpendiculaires entre elles pour le bagage.

11. Dispositif (1) selon la revendication 10, **caractérisé en ce que** les moyens d'éclairage (11, 12, 13) sont conçus pour signaler si la distance de la surface de contact respective est associée à une zone qui satisfait aux exigences prédéterminées pour la hauteur ou la largeur ou la profondeur du bagage.

12. Dispositif (1) selon l'une quelconque des revendications 1 à 11, **caractérisé en ce que** le dispositif (1) est mobile, en particulier présente des galets (24) sur sa face inférieure.

13. Dispositif (1) selon l'une quelconque des revendications 1 à 12, **caractérisé en ce que** le dispositif (1) présente une surface d'affichage (21) pour des informations telles que le nom de la compagnie aérienne imposant les exigences et/ou les dimensions maximales requises du bagage et/ou le poids maximal requis du bagage.

14. Dispositif (1) selon l'une quelconque des revendications 1 à 13, **caractérisé en ce que** le dispositif (1) présente des moyens de fixation, en particulier des réceptacles (25), pour des extrémités de ceinture d'une limite de file d'attente afin d'intégrer le dispositif dans une file d'attente.

15. Dispositif (1) selon l'une quelconque des revendications 1 à 14, **caractérisé en ce que** le dispositif (1) comprend une unité de stockage d'énergie, en particulier **en ce que** le dispositif est alimenté par une batterie.
